# FASCICULE DE BREVET EUROPEEN

(11) **EP 2 226 247 B1**
(45) Date de publication et mention de la délivrance du brevet: **10.10.2012**
(21) Numéro de dépôt: 10305141.3
(22) Date de dépôt: 11.02.2010
(51) Int. Cl.: B64D 15/00, B64D 15/12, B64D 15/16, B64F 5/00

(54) **Procédé d'assemblage d'un tapis dégivreur sur une pièce de voilure**
Verfahren zur Anbringung einer Enteisungsmatte an einem Flügel
Method for mounting a de-icing mat on a wing

(30) Priorité: 02.03.2009 FR 0951299
(43) Date de publication de la demande: 08.09.2010
(73) Titulaire: AERAZUR, 78370 Plaisir (FR)
(72) Inventeur: Boissy, Loïc, 76320, Caudebec les Elbeufs (FR)
(74) Mandataire: Zimmermann, Alain

(56) Documents cités:
- BE-A- 648 641
- GB-A- 885 131
- US-A- 5 427 332

## Description

La présente invention concerne un procédé d'assemblage d'un tapis dégivreur sur une pièce de voilure.

Il est connu afin d'éliminer le givre qui peut se former sur une pièce de voilure, de la recouvrir d'un tapis dégivreur. Un tel tapis est généralement collé sur la pièce de voilure. Avantageusement, une feuille de blindage protège de manière connue la pièce de voilure en recouvrant le tapis dégivreur. Cette feuille de blindage est généralement collée sur le tapis dégivreur. Le document US 5 427 332, qui est considéré l'état de la technique le plus proche, montre un tel procédé. Un tel assemblage, satisfaisant en terme de tenue mécanique, n'est cependant pas simple à démonter. Le démontage peut être rendu nécessaire par une panne du tapis dégivreur qui nécessite son remplacement. Un démontage risque d'entraîner une déformation de la feuille de blindage et/ou de la pièce de voilure. Un décollage s'effectue le plus souvent en utilisant un solvant et/ou un chauffage à haute température. Ces deux opérations risquent de détériorer la feuille de blindage et/ou la pièce de voilure, particulièrement dans le cas de pièces en matériau composite. Suite à un démontage il est parfois impossible de réutiliser la pièce de voilure et/ou le blindage. Ceci contribue à compliquer les opérations de maintenance et à en augmenter le coût.

Un but de la présente invention est de remédier à ces inconvénients en proposant un procédé d'assemblage d'un tapis dégivreur sur une pièce de voilure permettant un démontage aisé du tapis dégivreur.

L'invention a pour objet un procédé d'assemblage d'un tapis dégivreur sur une pièce de voilure, comprenant les étapes suivantes :
- mise en forme d'une feuille de blindage apte à recouvrir la pièce de voilure, telle que sa surface interne présente une forme complémentaire de la surface externe de ladite pièce de voilure en regard,
- solidarisation du tapis dégivreur à la surface interne de ladite feuille de blindage, en réservant une surface libre de tapis dégivreur sur le contour de ladite feuille de blindage, afin de permettre dans une zone de contact ainsi ménagée un contact direct entre le contour de la feuille de blindage et la pièce de voilure,
- fixation de la feuille de blindage sur ladite pièce de voilure au niveau de ladite zone de contact,
- injection d'une résine de remplissage entre le tapis dégivreur et la pièce de voilure.

Selon une autre caractéristique de l'invention, le procédé comprend encore, après l'étape d'injection, une étape de vulcanisation de la résine de remplissage.

Selon une autre caractéristique de l'invention, le procédé comprend encore, avant l'étape de fixation, une étape de mise en place de plots, sur le tapis dégivreur et/ou sur la pièce de voilure, garantissant un espace minimum entre le tapis dégivreur et la pièce de voilure.

Selon une autre caractéristique de l'invention, le procédé comprend encore, avant l'étape de fixation, une étape de dépôt d'une couche anti collante sur le tapis dégivreur, et/ou sur la pièce de voilure.

Selon une autre caractéristique de l'invention, le procédé comprend encore, avant l'étape de fixation, une étape de mise en place d'une vessie d'isolement sur le tapis dégivreur en regard de la pièce de voilure, et avant l'étape d'injection, une étape de gonflage de ladite vessie.

Selon une autre caractéristique de l'invention, le procédé comprend encore, après l'étape de vulcanisation, une étape de dégonflage de la vessie d'isolement.

Selon une autre caractéristique de l'invention, la vessie d'isolement est disposée en regard des zones où le tapis dégivreur est du type thermique.

Selon une autre caractéristique de l'invention, le procédé comprend encore, avant l'étape de fixation, une étape de mise en place d'un joint dans la zone de contact, afin que ledit joint soit placé entre la pièce de voilure et la feuille de blindage.

Selon une autre caractéristique de l'invention, le procédé comprend encore, après l'étape de fixation, une étape de mise en place d'un mastic dans la zone de contact au niveau du contour de la feuille de blindage.

Selon une autre caractéristique de l'invention, le procédé comprend encore, après l'étape de fixation, une étape de dépôt d'un vernis conducteur sur le contour de la feuille de blindage.

L'invention va maintenant être décrite plus en détail en référence à des modes de réalisation particuliers donnés à titre d'illustration uniquement et représentés sur les figures annexées dans lesquelles :
- les figures 1-4 représentent des étapes successives du procédé d'assemblage selon l'invention, selon une vue en coupe,
- la figure 5 représente une étape de démontage.

Il va de soi que la description détaillée de l'objet de l'invention, donnée uniquement à titre d'illustration, ne constitue en aucune manière une limitation, les équivalents techniques étant également compris dans le champ de la présente invention.

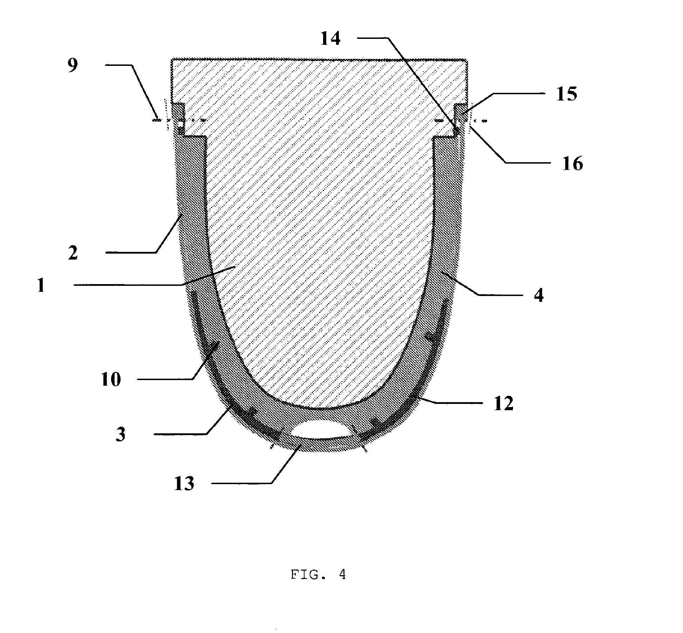

Un assemblage terminé est illustré à la figure 4. Il comprend une pièce de voilure 1 vue en coupe, une feuille de blindage 2 recouvrant ladite pièce de voilure 1 en emprisonnant entre la feuille de blindage 2 et la pièce de voilure 1 un tapis dégivreur 3.

Une pièce de voilure désigne de manière générique une aile d'avion, une gouverne, une pale d'hélice, une pale de rotor d'hélicoptère ou tout autre pièce équivalente.

Un tapis dégivreur 3 est un tapis souple destiné à dégivrer l'assemblage. Il agit donc pour que la surface externe de l'assemblage, soit la surface externe de la feuille de blindage 2 soit dégivrée. Il existe deux types de tapis dégivreurs 3.

Un premier type dit thermique agit thermiquement. Un contact intime entre le tapis dégivreur 3 et la surface interne 5 de la feuille de blindage 2 permet une transmission de la chaleur produite par le tapis dégivreur thermique 13 à la feuille de blindage 2. Ladite chaleur se communique à la surface externe de la feuille de blindage 2 et provoque ainsi une fonte d'un dépôt de glace éventuellement présent sur cette surface externe.

Un second type dit électro-expulsif agit mécaniquement. Un choc est produit par le tapis dégivreur 3. Un contact intime entre le tapis dégivreur 3 et la surface interne 5 de la feuille de blindage 2 permet une transmission dudit choc produit par le tapis dégivreur électro-expulsif 12 à la feuille de blindage 2. Ledit choc se transmet jusqu'à la surface externe de la feuille de blindage 2 et provoque ainsi un décollage d'une pellicule de glace éventuellement présente sur cette surface externe.

En fonction des zones de la pièce de voilure 1, un tapis thermique 13 ou électro-expulsif 12 s'avère plus efficace. Ainsi par exemple un tapis thermique 13 est préféré pour le bord d'attaque de la pièce de voilure 1 où la courbure est importante, tandis qu'un tapis électro-expulsif 12 est bien adapté aux zones de plus faible courbure. Les deux types sont complémentaires et un tapis dégivreur 3 est classiquement composé d'un assemblage de zones de type thermique 13 et de zones de type électro-expulsif 12.

Le procédé de réalisation d'un tel assemblage comprend une première étape de mise en forme d'une feuille de blindage 2 afin qu'elle puisse recouvrir la pièce de voilure 1. Ainsi, sa surface interne 5 présente une forme complémentaire de la surface externe 6 de la pièce de voilure 1 en regard.

Selon une seconde étape, un tapis dégivreur 3 est solidarisé à la surface interne 5 de ladite feuille de blindage 2. Cette solidarisation peut être effectuée par collage, lequel est réalisé par tout moyen connu, par exemple de manière classique, en utilisant un primaire et une colle contact.

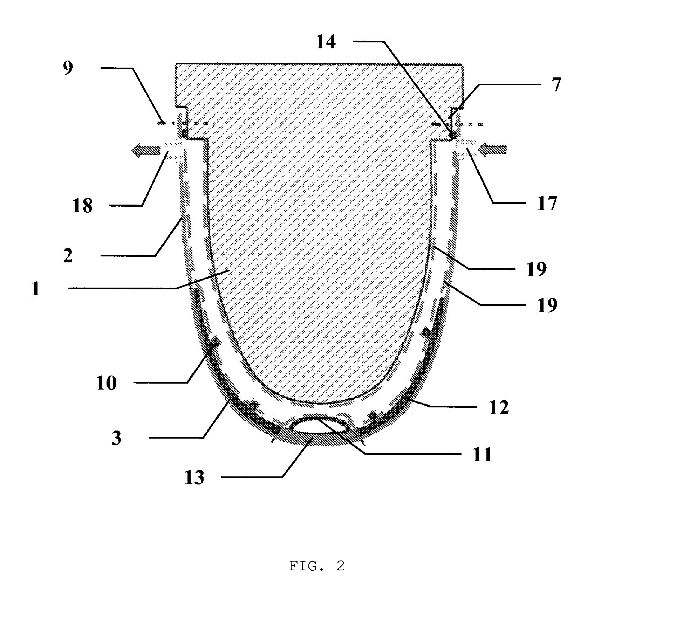

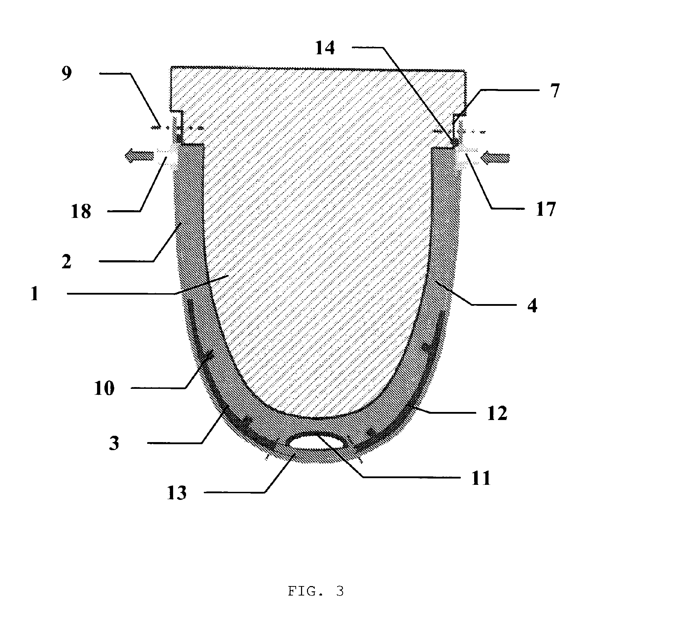

Comme cela est visible sur les figures 2, 3 et 4, cette solidarisation réserve une surface libre 7, sans tapis dégivreur, au moins au niveau du contour 8 de la feuille de blindage 2. Cette réserve permet, dans une zone de contact 7 ainsi ménagée un contact direct entre le contour 8 de la feuille de blindage 2 et la pièce de voilure 1.

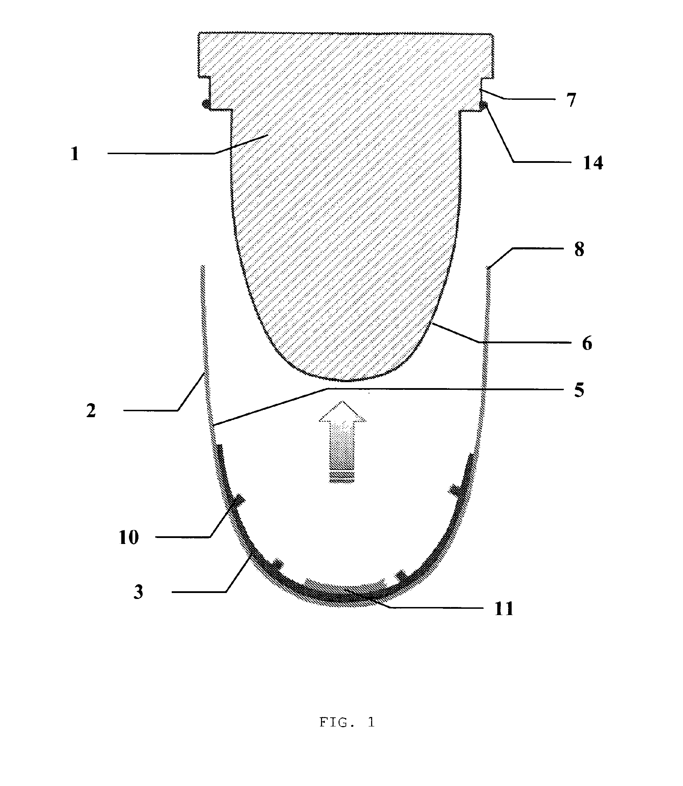

A l'issue de ces deux étapes l'assemblage est dans l'état illustré à la figure 1.

Dans une troisième étape, illustrée à la figure 2, la feuille de blindage 2 est amenée en position de contact avec la pièce de voilure 1 et est fixée sur ladite pièce de voilure 1 au niveau de ladite zone de contact 7. Cette fixation peut être réalisée par tout moyen connu, tel que collage, rivetage, vissage, ici figuré par les moyens de fixation 9 représenté par un simple trait d'axe.

Toujours en référence à la figure 2, l'assemblage est ensuite préparé pour une étape d'injection. Pour cela il est disposé au moins une ouverture d'injection 17 et au moins une ouverture d'aspiration 18.

La quatrième étape consiste en une injection d'une résine 4 de remplissage entre le tapis dégivreur 3 et la pièce de voilure 1. La résine 4 est injectée par ladite ouverture d'injection 17, pendant qu'une aspiration est pratiquée au niveau de l'ouverture d'aspiration 18. Ainsi la résine 4 remplit tout l'espace interstitiel formé entre la pièce de voilure 1 et le tapis dégivreur 3 ou la feuille de blindage 2.

A l'issue de l'étape d'injection de la résine 4, les ouvertures d'injection 17 et d'aspiration 18 sont supprimées.

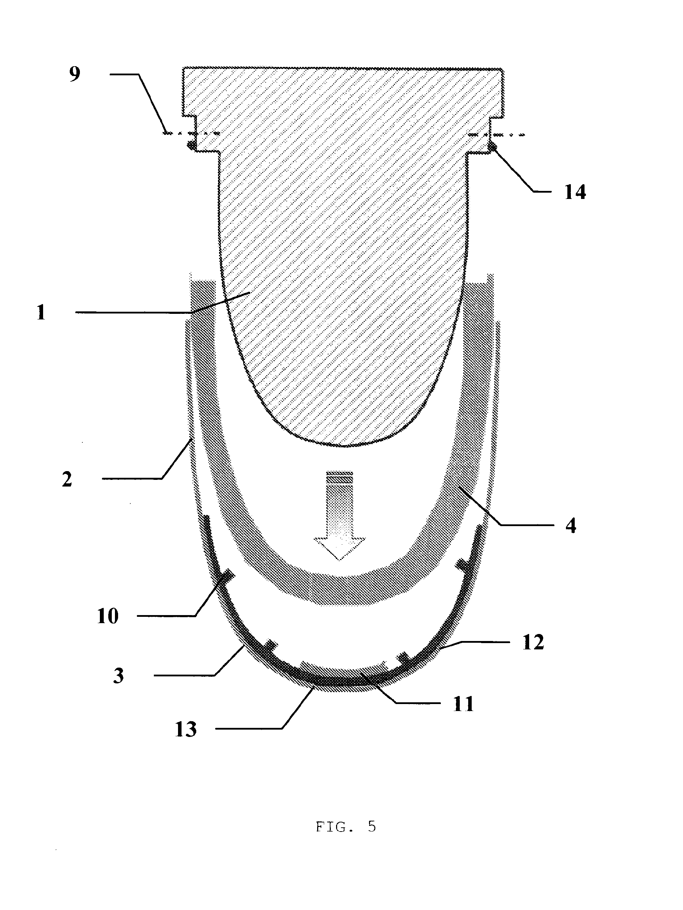

L'avantage principal de l'invention est ici visible. La résine 4 présente une adhérence bien plus faible qu'un collage, tant sur la pièce de voilure 1 que sur le tapis dégivreur 3 ou la feuille de blindage 2. Un démontage illustré à la figure 5 est facilement réalisé en démontant uniquement les fixations 9. Il est ensuite aisé de séparer la feuille de blindage 2 munie du tapis dégivreur 3, le morceau de résine 4 et la pièce de voilure 1, sans risquer de déformer ou de dégrader l'un ou l'autre des composants utiles 1, 2, 3. Le morceau de résine 4, peu coûteux, peut être jeté.

Il est alors possible par des procédés connus de décoller le tapis dégivreur 3 ou simplement la partie de tapis dégivreur 3 en panne, pour la remplacer.

Ensuite l'assemblage peut être remonté par application des mêmes étapes que celles précédemment décrites.

Ce procédé est avantageusement applicable à une pièce de voilure 1 métallique ou composite. De même la feuille de blindage 2 peut être en métal, en matière plastique ou encore en une matière composite.

Selon le type de résine, il est avantageux de réaliser une vulcanisation de la résine 4 de remplissage après l'étape d'injection. Ceci peut être effectué, particulièrement dans le cas de résines thermodurcissables, en appliquant sur la surface externe de la feuille de blindage 2 une couverture chauffante.

La résine 4 de remplissage peut être de tout type connu permettant de réaliser un durcissement. Avantageusement, la résine 4 peut être une résine Epoxyde. Avantageusement ses caractéristiques sont :

| Matière | Epoxyde |
|---|---|
| Dureté | > 80 shore D |
| Température d'utilisation en continu une fois vulcanisée | > 120°C |
| Température de vulcanisation | 20°C < Tr < 80°C |
| Epaisseur maximum de moulage | 50 mm |
| Viscosité | 1 mPa.s < V < 20 000 mPa.s |
| Retrait | < 0,1 % |

Avantageusement encore, avant l'étape de fixation, il peut être mis en place des plots 10 entre le tapis dégivreur 3 et la pièce de voilure 1. Ces plots 10 ont pour fonction de maintenir une épaisseur minimale garantissant un espace entre la pièce de voilure 1 et le tapis dégivreur 3 ou la feuille de blindage 2. Cet espace minimum peut présenter une épaisseur constante avec des plots 10 de hauteur constante. En maintenant une certaine épaisseur, ces plots 10 contribuent à faciliter la circulation de la résine 4 lors de l'injection. Ces plots 10 peuvent être disposés sur le tapis dégivreur 3 et/ou sur la pièce de voilure 1. Avantageusement, ils peuvent être réalisés de matière avec le tapis dégivreur 3 et/ou la pièce de voilure 1.

Afin de faciliter le démontage de l'ensemble et une bonne dissociation des composants de l'assemblage, il est avantageusement réalisé, avant l'étape de fixation, une étape de dépôt d'une couche anti collante 19 sur le tapis dégivreur 3, sur la pièce de voilure 1, ou encore sur les deux, au niveau de l'interface entre la résine 4 et un des composants 1, 2, 3. Un exemple de réalisation d'une telle couche anti collante 19 est un dépôt de produit démoulant pour résine. Ce dépôt peut être appliqué au pistolet.

Afin de réaliser une réserve en constituant un espace vide à l'arrière d'une partie du tapis dégivreur 3, il peut être avantageusement réalisé, avant l'étape de fixation, une étape de mise en place d'une vessie 11 d'isolement. Cette vessie 11 d'isolement est déposée sur le tapis dégivreur 3, sur la face opposée à la feuille de blindage 2, soit en regard de la pièce de voilure 1.

Avant de procéder à l'étape d'injection, il est procédé à une étape de gonflage de ladite vessie 11 d'isolement. Ainsi la vessie 11 d'isolement gonflée réserve un volume au dos du tapis dégivreur 3 qui n'est pas occupé par la résine 4.

Une fois la résine 4 durcie par l'étape de vulcanisation, il est possible de procéder au dégonflage de la vessie 11. Ce dégonflage réduit ladite vessie 11, qui peut même être retirée et réalise un espace vide d'air au dos du tapis dégivreur 3.

Un tel vide d'air est particulièrement fonctionnel au dos d'un tapis dégivreur 3 de type thermique 13. En effet la déperdition thermique du dégivreur thermique 13 vers l'air dudit vide est moins importante que la déperdition thermique qui se produirait vers la résine 4.

A contrario, la résine 4 au dos d'un dégivreur électro-expulsif 12 est très appréciable. En plaquant le dégivreur électro-expulsif 12 contre la feuille de blindage 2, la résine 4 contribue à améliorer la transmission du choc à la feuille de blindage 2 et donc l'efficacité du dégivrage.

Aussi avantageusement, une vessie 11 d'isolement est disposée en regard des zones où le tapis dégivreur 3 est du type thermique 13.

Afin d'améliorer l'étanchéité de la liaison entre la pièce de voilure 1 et la feuille de blindage 2, le procédé comprend avantageusement, avant l'étape de fixation, une étape de mise en place d'un joint 14 dans la zone de contact 7. Ce joint 14 est disposé sur la pièce de voilure 1, ou sur la feuille de blindage 2, afin que ledit joint 14 se retrouve lors de l'assemblage de la feuille de blindage 2 sur la pièce de voilure 1, placé entre la pièce de voilure 1 et la feuille de blindage 2, dans la zone de contact 7.

Avantageusement encore, afin de finir l'interface entre la pièce de voilure 1 et la feuille de blindage 2, il peut être mis en place un mastic 15 dans la zone de contact 7 au niveau du contour 8 de la feuille de blindage 2. Cette étape est illustrée à la figure 4.

De manière alternative ou complémentaire à l'étape de masticage, il peut être procédé, après l'étape de fixation, à une étape de dépôt d'un vernis conducteur 16 sur le contour 8 de la feuille de blindage 2.

## Revendications

1. Procédé d'assemblage d'un tapis dégivreur (3) sur une pièce de voilure (1), **caractérisé en ce qu'**il comprend les étapes suivantes :
- mise en forme d'une feuille de blindage (2) apte à recouvrir la pièce de voilure (1), telle que sa surface interne (5) présente une forme complémentaire de la surface externe (6) de ladite pièce de voilure (1) en regard,
- solidarisation du tapis dégivreur (3) à la surface interne (5) de ladite feuille de blindage (2), en réservant une surface libre de tapis dégivreur sur le contour (8) de ladite feuille de blindage (2), afin de permettre dans une zone de contact (7) ainsi ménagée un contact direct entre le contour (8) de la feuille de blindage (2) et la pièce de voilure (1),
- fixation de la feuille de blindage (2) sur ladite pièce de voilure (1) au niveau de ladite zone de contact (7),
- injection d'une résine (4) de remplissage entre le tapis dégivreur (3) et la pièce de voilure (1).

2. Procédé selon la revendication 1, comprenant encore, après l'étape d'injection, une étape de vulcanisation de la résine (4) de remplissage.

3. Procédé selon la revendication 1 ou 2, comprenant encore, avant l'étape de fixation, une étape de mise en place de plots (10), sur le tapis dégivreur (3) et/ou sur la pièce de voilure (1), garantissant un espace minimum entre le tapis dégivreur (3) et la pièce de voilure (1).

4. Procédé selon l'une quelconque des revendications 1 à 3, comprenant encore, avant l'étape de fixation, une étape de dépôt d'une couche anti collante (19) sur le tapis dégivreur (3), et/ou sur la pièce de voilure (1).

5. Procédé selon l'une quelconque des revendications 1 à 4, comprenant encore, avant l'étape de fixation, une étape de mise en place d'une vessie (11) d'isolement sur le tapis dégivreur (3) en regard de la pièce de voilure (1), et avant l'étape d'injection, une étape de gonflage de ladite vessie (11) d'isolement.

6. Procédé selon la revendication 5, comprenant encore, après l'étape de vulcanisation, une étape de dégonflage de la vessie (11) d'isolement.

7. Procédé selon la revendication 5 ou 6, où la vessie (11) d'isolement est disposée en regard des zones où le tapis dégivreur (3) est du type thermique (13).

8. Procédé selon l'une quelconque des revendications 1 à 7, comprenant encore, avant l'étape de fixation, une étape de mise en place d'un joint (14) dans la zone de contact (7), afin que ledit joint (14) soit placé entre la pièce de voilure (1) et la feuille de blindage (2).

9. Procédé selon l'une quelconque des revendications 1 à 8, comprenant encore, après l'étape de fixation, une étape de mise en place d'un mastic (15) dans la zone de contact (7) au niveau du contour de la feuille de blindage (2).

10. Procédé selon l'une quelconque des revendications 1 à 9, comprenant encore, après l'étape de fixation, une étape de dépôt d'un vernis conducteur (16) sur le contour (8) de la feuille de blindage (2).

## Claims

1. A Method of assembling a de-icing mat (3) on a piece of wing structure (1), **characterized in that** it comprises the following steps:
- shaping a shielding foil (2) able to cover the piece of wing structure (1), such that the internal surface (5) thereof has a shape that complements the external surface (6) of said piece of wing structure (1) facing it,
- securing the de-icing mat (3) to the internal surface (5) of said shielding foil (2), leaving a surface uncovered with the de-icing mat on the contour (8) of said shielding foil (2), so as to allow, in a contact region (7) thus created, direct contact between the contour (8) of the shielding foil (2) and the piece of wing structure (1),
- attaching the shielding foil (2) to said piece of wing structure (1) at said contact region (7),
- injecting a filling resin (4) between the de-icing mat (3) and the piece of wing structure (1).

2. The method of Claim 1, further comprising, after the injection step, a step of curing the filling resin (4).

3. The method of Claim 2, further comprising, before the attachment step, a step of fitting pads (10) to the de-icing mat (3) and/or to the piece of wing structure (1) to ensure a minimum space between the de-icing mat (3) and the piece of wing structure (1).

4. The method of Claim 2, further comprising, before the attachment step, a step of depositing a preventing sticking coat (19) on the de-icing mat (3) and/or on the piece of wing structure (1).

5. The method of Claim 2, further comprising, before the attachment step, a step of fitting an insulating bladder (11) on the de-icing mat (3) facing the piece of wing structure (1) and, before the injection step, a step of inflating said insulating bladder (11).

6. The method of Claim 5, further comprising, after the curing step, a step of deflating the insulating bladder (11).

7. The method of Claim 5, in which the insulating bladder (11) is positioned facing regions in which the de-icing mat (3) is of a thermal type (13).

8. The method of Claim 1, further comprising, before the attachment step, a step of fitting a seal (14) in the contact region (7) so that said seal (14) is positioned between the piece of wing structure (1) and the shielding foil (2).

9. The method of Claim 1, further comprising, after the attachment step, a step of introducing a mastic (15) into the contact region (7) at the contour of the shielding foil (2).

10. The method of Claim 1, further comprising, after the attachment step, a step of depositing a conducting varnish (16) on the contour (8) of the shielding foil (2).

## Patentansprüche

1. Verfahren zum Anbringen einer Enteisungsmatte (3) an einem Teil (1) eines Flügels, **dadurch gekennzeichnet, dass** es die folgenden Schritte umfasst:
- Ausformen einer Abschirmfolie (2), die zum Bedecken des Teils (1) des Flügels geeignet ist, so dass deren Innenfläche (5) zu der Außenfläche (6) dieses Teils (1) des Flügels formschlüssig ist,
- Verbinden der Enteisungsmatte (3) mit der Innenfläche (5) der Abschirmfolie (2), wobei eine Fläche der Enteisungsmatte auf dem Umfang (8) dieser Abschirmmatte (2) freigelassen wird, um so in einem auf diese Weise geschaffenen Kontaktbereich (7) den direkten Kontakt zwischen dem Umfang (8) der Abschirmfolie (2) und dem Teil (1) des Flügels zu ermöglichen,
- Befestigen der Abschirmfolie (2) an dem Teil (1) des Flügels in diesem Kontaktbereich (7),
- Einspritzen eines Füllharzes (4) zwischen die Enteisungsmatte (3) und den Teil (1) des Flügels.

2. Verfahren gemäß Anspruch 1, das nach dem Einspritzschritt weiter einen Schritt des Härtens des Füllharzes (4) umfasst.

3. Verfahren gemäß Anspruch 1 oder 2, das vor dem Befestigungsschritt weiter einen Schritt des Anbringens von Noppen (10) an der Enteisungsmatte (3) und/oder an dem Teil (1) des Flügels umfasst, um einen Mindestabstand zwischen der Enteisungsmatte (3) und dem Teil (1) des Flügels sicher zu stellen.

4. Verfahren gemäß einem der Ansprüche 1 bis 3, das vor dem Befestigungsschritt weiter einen Schritt des Aufbringens einer Anti-Haftschicht (19) auf die Enteisungsmatte (3) und/oderden Teil (1) des Flügels umfasst.

5. Verfahren gemäß einem der Ansprüche 1 bis 4, das vor dem Befestigungsschritt weiter einen Schritt des Anbringens einer Isolierblase (11) auf der Enteisungsmatte (3) gegenüber dem Teil (1) des Flügels und vor dem Einspritzschritt weiter einen Schritt des Aufblasens der Isolierblase (11) umfasst.

6. Verfahren gemäß Anspruch 5, das nach dem Härtungsschritt weiter einen Schritt des Entleerens der Isolierblase (11) umfasst.

7. Verfahren gemäß Anspruch 5 oder 6, bei dem sich die Isolierblase (11) gegenüber von Bereichen befindet, in denen die Enteisungsmatte (3) vom thermischen Typ (13) ist.

8. Verfahren gemäß einem der Ansprüche 1 bis 7, das vor dem Befestigungsschritt weiter einen Schritt des Anbringens einer Dichtung (14) im Kontaktbereich (7) umfasst, so dass sich diese Dichtung (14) zwischen dem Teil (1) des Flügels und der Abschirmfolie (2) befindet.

9. Verfahren gemäß einem der Ansprüche 1 bis 8, das nach dem Befestigungsschritt weiter einen Schritt des Anbringens eines Kitts (15) im Kontaktbereich (7) am Umfang der Abschirmfolie (2) umfasst.

10. Verfahren gemäß einem der Ansprüche 1 bis 9, das nach dem Befestigungsschritt weiter einen Schritt des Aufbringens eines leitfähigen Lacks (16) über den Umfang (8) der Abschirmfolie (2) umfasst.
